**Europäisches Patentamt**

**European Patent Office**

**Office européen des brevets**

(19)

(11) Veröffentlichungsnummer: **0 010 608**
**B1**

(12)

# EUROPÄISCHE PATENTSCHRIFT

(45) Veröffentlichungstag der Patentschrift:
**12.08.81**

(21) Anmeldenummer: **79103541.3**

(22) Anmeldetag: **20.09.79**

(51) Int. Cl.³: **C 22 B 3/00,** C 22 B 60/02,
B 01 D 15/02, B 01 J 19/04

(54) Verfahren und Vorrichtung zur Gewinnung von gelösten, suspendierten oder chemisch gebundenen Stoffen aus Wasser.

(30) Priorität: **27.09.78 DE 2842058**

(43) Veröffentlichungstag der Anmeldung:
**14.05.80 Patentblatt 80/10**

(45) Bekanntmachung des Hinweises auf die Patenterteilung:
**12.08.81 Patentblatt 81/32**

(84) Benannte Vertragsstaaten:
**BE DE FR GB IT LU NL**

(56) Entgegenhaltungen:
**DE-A1-2 550 751**
**DE-A1-2 711 587**
**DE-A1-2 711 609**
**DE-A1-2 750 428**
**DE-C-490 207**
**DE-C-841 508**
**US-A-3 436 213**

(73) Patentinhaber: **Uranerzbergbau-GmbH, Kölnstrasse 367,**
**D-5300 Bonn 1 (DE)**

(72) Erfinder: **Bals, Hans Günter, Blümgesgrund 44,**
**D-6460 Gelnhausen (DE)**

(74) Vertreter: **Koepsell, Helmut, Dipl.-Ing., Mittelstrasse 7,**
**D-5000 Köln 1 (DE)**

## Verfahren und Vorrichtung zur Gewinnung von gelösten, suspendierten oder chemisch gebundenen Stoffen aus Wasser

Die Erfindung betrifft ein Verfahren und eine Vorrichtung zur Gewinnung von gelösten, suspendierten oder chemisch gebundenen Stoffen, z. B. Uran- oder anderen Metallverbindungen, aus einem eine im wesentlichen horizontale Strömung aufweisenden Gewässer, aus welchem Wasser in einem im wesentlichen in die Vertikale umgelenkten Strom durch ein fluidiertes Bett aus die Stoff bindenden Adsorberpartikeln geleitet wird.

Die DE-A 2 550 751 offenbart ein derartiges Verfahren und eine zu seiner Durchführung geeignete Vorrichtung, wobei mehrere fluidierte Betten, die sich in von einem Tragkörper getragenen Auslegern befinden, in einer Wasserströmung angeordnet sind. Dabei weisen die Ausleger verstellbare Leitflächen auf, mittels welcher die Strömung beeinflußt werden soll.

In Anbetracht der Tatsache, daß beispielsweise im Meerwasser oder auch in anderem Wasser die für eine Gewinnung in Frage kommenden Stoffe in außerordentlich starker Verdünnung vorhanden sind — eine Tonne Meerwasser enthält nur etwa 3 mg Uran — ist es für die Gewinnung derartiger Stoffe erforderlich, außerordentlich große Wassermengen durchzusetzen. So wird es notwendig sein, für die Gewinnung von Uran in einer Menge, die wirtschaftlich interessant ist, Wasser in der Größenordnung von Milliarden Tonnen durchzusetzen. Der spezifische nukleare Energieinhalt im Meer vorhandenen Urans ist somit sehr gering. Daraus ergibt sich, daß für den gesamten Gewinnungsprozeß pro Einheit des zu behandelnden Wassers nur ein geringer Bruchteil dieser Energie aufgewendet werden darf, damit am Ende die Energiebilanz positiv bleibt.

Mithin ist es für die wirtschaftliche Gewinnung beispielsweise von Uran unter Anwendung des eingangs erwähnten Verfahrens erforderlich, die für das Fluidieren des Bettes aus Adsorberpartikeln notwendige Energie anderen im Meer vorhandenen Energiequellen zu entnehmen. Dazu bieten sich die natürlichen Meeresströmungen oder ggf. auch die Strömung eines Flusses an. Es hat sich jedoch herausgestellt, daß die derartigen Strömungen innewohnende kinetische Energie so gering ist, daß ohne besondere Vorkehrungen eine Nutzbarmachung dieser Energie für das Aufrechterhalten des genannten Fluidatbettes nicht möglich ist. Jedenfalls reichen die in der DE-A 2 550 751 offenbarten Leitflächen nicht immer aus, um dies zu erreichen.

Der Erfindung liegt unter anderem die Aufgabe zugrunde, Verfahren und Vorrichtung der einleitend beschriebenen Art so auszugestalten, daß die in den Gewässern vorhandenen Strömungsenergien so effektiv wie möglich nutzbar gemacht werden für die Aufrechterhaltung des von den Adsorberteilchen gebildeten Fluidatbettes. Die Verfahrensführung und insbesondere auch die dazu benutzte Vorrichtung sollen einfach, übersichtlich und insbesondere auch wenig reparaturanfällig und somit störungsfrei sein. Die insgesamt für die Erzielung des angestrebten Effektes aufzuwendenden Mittel sollen wirtschaftlich, jedenfalls im Rahmen des notwendigen Gesamtaufwandes, nicht ins Gewicht fallen.

Zur Lösung dieser Aufgabe schlägt die Erfindung vor, daß das durch das Bett zu leitende Wasser zumindest vor der Umlenkung in die Vertikale zwecks Erhöhung des statischen Druckes durch einen Diffusor geführt wird. In letzterem wird die Strömung entsprechend der Erweiterung des Diffusorquerschnittes verlangsamt. Gleichzeitig erhöht sich der statische Druck im Diffusor, in dem der dynamische Druck abgebaut wird. Der so wirksam werdende statische Druckanstieg wird dazu benutzt, das Wasser nach einer Umlenkung in einem aufsteigenden oder absinkenden Strom, also im wesentlichen vertikal durch das Adsorberbett und ggf. vorhandene Stabilisierungseinrichtungen hindurchzudrücken. Dabei müssen die beim Durchströmen der Gesamtanlage, also im wesentlichen Diffusor, ggf. vorhandener Übergangsbereich, Bett aufnehmendes Gehäuse und Stabilisierungseinrichtungen, auftretenden Druckverluste kleiner sein als der dynamische Druck der Strömung.

Es wird im allgemeinen vorteilhaft sein, Strömungsgeschwindigkeit und statischen Druck durch geeignete Einbauten im Diffusor zu vergleichmäßigen mit dem Ergebnis, daß der statische Druck am Austritt des Diffusors sowie in der gesamten Zwischenkammer vergleichmäßigt wird und so auch in dem von den Adsorberpartikeln gebildeten Bett die im wesentlichen vertikal nach oben oder unten gerichtete Strömung über den Querschnitt des Bettes einigermaßen gleichmäßig ist. Auf diese Weise läßt sich ein ruhiger, Turbulenzen vermeidender Strömungsverlauf im Adsorberbett erreichen, so daß die einzelnen Adsorberpartikel sich nur wenig innerhalb des Bettes relativ zueinander bewegen. Dies begünstigt eine gute Beladung der Partikel mit der zu gewinnenden Substanz und verringert die Bildung von Abrieb. Die Vergleichmäßigung sollte so durchgeführt werden, daß der Wirkungsgrad der Druckumwandlung keine Verringerung, sondern vielmehr eine Vergrößerung erfährt.

Aufgrund der großen durchzusetzenden Wassermengen wird eine Anlage zur Gewinnung der genannten Stoffe auch entsprechend große Abmessungen haben. Dabei wird es in vielen Fällen, beispielsweise bei Verankerung einer solchen Anlage in einer Meeresströmung, unvermeidbar sein, daß das Wasser, bevor es in den Diffusor strömt, an irgendwelchen äußeren Begrenzungsflächen der Anlage entlangströmt und dabei aufgrund der unvermeidbaren Reibung zwischen einer solchen Begrenzungsfläche und der Grenzschicht des Wassers eine Verzögerung und somit einen Gesamtdruckverlust erfährt. Bei Strömungen mit einer langsameren Normalgeschwindigkeit kann dies dazu führen, daß die aufgrund der Flächenreibung verringerte Strömungsgeschwindigkeit nicht mehr ausreicht, um den notwendigen statischen Druck innerhalb des das Bett aufnehmenden Gehäuses zu bewirken. In solchen Fällen kann gemäß einem weiteren Vorschlag der Erfindung so verfahren werden, daß wenigstens die energiearme Teilschicht der Wasser-Grenzschicht, die vor Erreichen des Diffusors unter dem Einfluß von Flächenreibung entsteht, mittels eines Ableitkanals vom Eintritt in die Öffnung des Einlaufdiffusors abgehalten wird. Zweckmäßig geschieht dies in der Weise, daß diese energiearme Wasser-Grenzschicht oder zumindest eine Teilschicht derselben von der benachbarten, eine ausreichende Strömungsgeschwindigkeit aufweisenden Wasserschicht abgetrennt und aus dem Einlaufbereich des Diffusors abgeleitet wird, so daß in den Diffusor nur Wasser mit ausreichender Strömungsgeschwindigkeit eintritt.

Zur Durchführung des Verfahrens gemäß der Erfindung wird vorteilhaft eine Vorrichtung mit einem Gehäuse benutzt, das wenigstens einen im wesentlichen vertikalen Kanal für die Aufnahme des Fluidatbettes und den Durchgang der Flüssigkeit aufweist. Dadurch ist dem Eingang des vertikalen Kanals ein im wesentlichen horizontal verlaufender Diffusor vorgeschaltet, dessen Eintrittsöffnung der im wesentlichen horizontalen Strömung entgegengerichtet ist. Selbstverständlich wird es nicht immer möglich sein, die Eintrittsöffnung bzw. die Längsachse des Diffusors genau parallel zur Strömung und dieser entgegengerichtet anzuordnen. Es ist aber erforderlich, den Diffusor mit seiner Eintrittsöffnung so anzuordnen, daß eine wesentliche Komponente der Wasserströmung im vorbeschriebenen Sinne wirksam wird.

Die untere oder obere Begrenzungsfläche des Diffusors kann im wesentlichen horizontal bzw. parallel zur unteren bzw. oberen Begrenzung des Gehäuses und somit im wesentlichen parallel zur Strömungsrichtung verlaufen. Es ist aber auch möglich, obere und untere Begrenzungswandungen des Diffusors symmetrisch zu einer horizontalen Mittelebene anzuordnen.

Die Abmessung des Diffusors in Strömungsrichtung kann etwa der Querschnittsabmessung des Kanals bzw. des Gehäuses in dieser Richtung entsprechen. Zwischen Diffusor und Gehäuseeinlauf kann ein Zwischenbereich angeordnet sein, der vom Gehäuse oder von einem in oder nahe dem Einlauf befindlichen siebartigen Strömungswiderstand und durch eine Wand begrenzt ist, deren Abstand vom Gehäuse in Strömungsrichtung des Wassers abnehmen kann. Dadurch wird die Strömung des Wassers im Zwischenbereich günstig beeinflußt. Es besteht die Möglichkeit, daß auch in diesem Zwischenbereich eine Verlangsamung der Strömung mit entsprechendem Anstieg des statischen Druckes eintritt.

Wenn auch der vertikale Kanal sich in Strömungsrichtung diffusorartig erweitert, wird zusätzlich das Vorhandensein einer ruhigen Strömung begünstigt, die in Verbindung mit der bereits erwähnten Vergleichmäßigung der Wassergeschwindigkeit über den Querschnitt des Gehäuses bzw. Bettes dazu führt, daß die einzelnen Adsorberpartikel bei Berücksichtigung der übrigen Einflußgrößen, z. B. Gewicht, Größe und Form der Adsorberpartikel sich quasistationär verhalten.

Die Vorrichtung ist vorteilhaft in der Weise ausgebildet, daß mehrere Gehäuse in Strömungsrichtung des Wassers hintereinander und derart höhenversetzt zueinander angeordnet sind, daß das in Strömungsrichtung jeweils folgende Gehäuse tiefer angeordnet ist als das vorangehende Gehäuse. Dabei kann der Diffusor eines Gehäuses unterhalb des vorangehenden Gehäuses angeordnet sein, um so eine kompakte Bauweise zu erreichen.

Bei geringerer Strömungsgeschwindigkeit ist es vorteilhaft, die Einlauföffnung des Diffusors so anzuordnen, daß sie sich in einem Abstand von benachbarten Begrenzungsflächen der jeweils vorangehenden Baueinheit oder auch einer anderen Baueinheit befindet und oberhalb oder unterhalb des Diffusors und parallel zu diesem ein Ableitkanal vorgesehen ist, der die unmittelbar unterhalb oder oberhalb des in Strömungsrichtung davor liegenden Gehäuses bzw. Diffusors befindliche Wasser-Grenzschicht oder eine Teilschicht derselben ableitet. Der Abstand des Diffusors von der vorerwähnten Begrenzungsfläche sollte nach Möglichkeit mindestens etwa der Höhe der Wasserschicht entsprechen, die durch Entlangströmen an der Begrenzungsfläche eine Verlangsamung erfährt. Allerdings wird dies abhängen von den jeweiligen Strömungsverhältnissen, insbesondere der normalen, also unverlangsamten Strömungsgeschwindigkeit. Im allgemeinen wird der Ableitkanal sich über die gesamte Breite des Einlaufdiffusors erstrecken und zwischen letzterem und dem Gehäuse der vorgeschalteten Baueinheit verlaufen und an seinem Austrittsende zwischen zwei in Strömungsrichtung aufeinanderfolgenden Gehäusen offen sein.

Bei Verwendung von Adsorbermaterial, dessen spezifisches Gewicht größer ist als das des Wassers, müßte zur Aufrechterhaltung eines Fluidatbettes der dieses aufnehmende Kanal von unten nach oben durchströmt werden. Im anderen Fall, wenn das Adsorbermaterial ein geringeres spezifisches Gewicht als Wasser aufweist, muß der Kanal in umgekehrter Richtung, also von oben nach unten, durchströmt werden. Dies würde bedeuten, daß die im folgenden beschriebenen und in der Zeichnung dargestellten Ausführungsbeispiele zur Horizontalen spiegelbildlich ausgestaltet sein würden.

Weitere Merkmale und Vorteile der Erfindung ergeben sich aus der folgenden Beschreibung einiger Ausführungsbeispiele und der zugehörigen Zeichnung: Es zeigen

Fig. 1 im Schema die perspektivische Ansicht eines mit einer Vorrichtung zur Gewinnung von Stoffen aus dem Meer versehenen Einrichtung,

Fig. 2 die Seitenansicht der Vorrichtung gemäß Fig. 1, teilweise im Schnitt und in größerem Maßstab,

Fig. 3 im Schema einen Ausschnitt aus einer weiteren Ausführungsform in der Ansicht gemäß Fig. 2,

Fig. 4 eine Draufsicht auf die Ausführungsform gemäß Fig. 3, teilweise im Schnitt,

Fig. 5 die perspektivische Ansicht einer weiteren Ausführungsform, teilweise im Schnitt,

Fig.6a und 6b im Schema Längsschnitt durch einen Diffusor und zugehöriges Geschwindigkeitsprofil,

Fig. 7a und 7b den Fig. 6a und 6b entsprechende Darstellungen einer anderen Ausführungsform eines Diffusors.

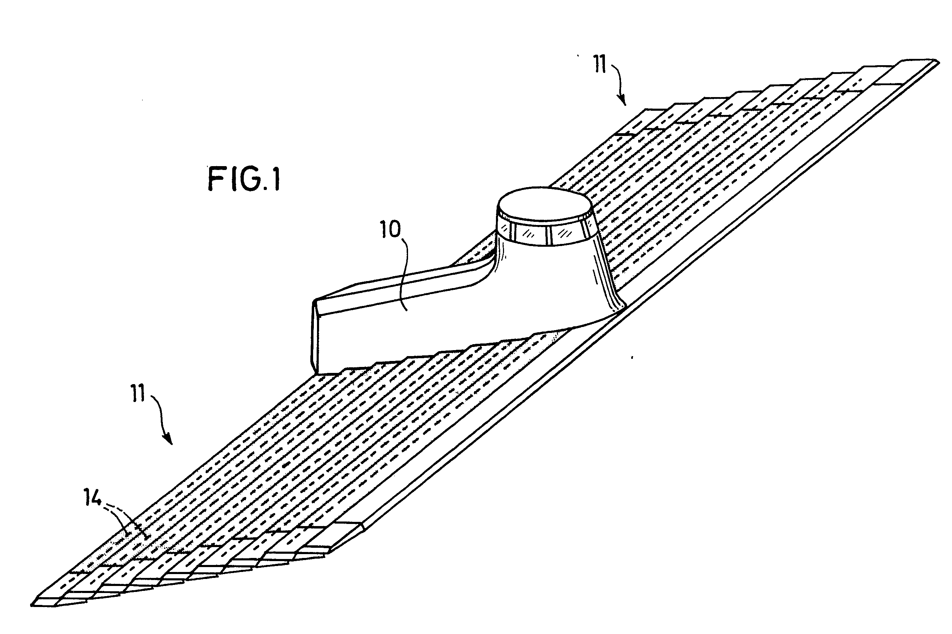

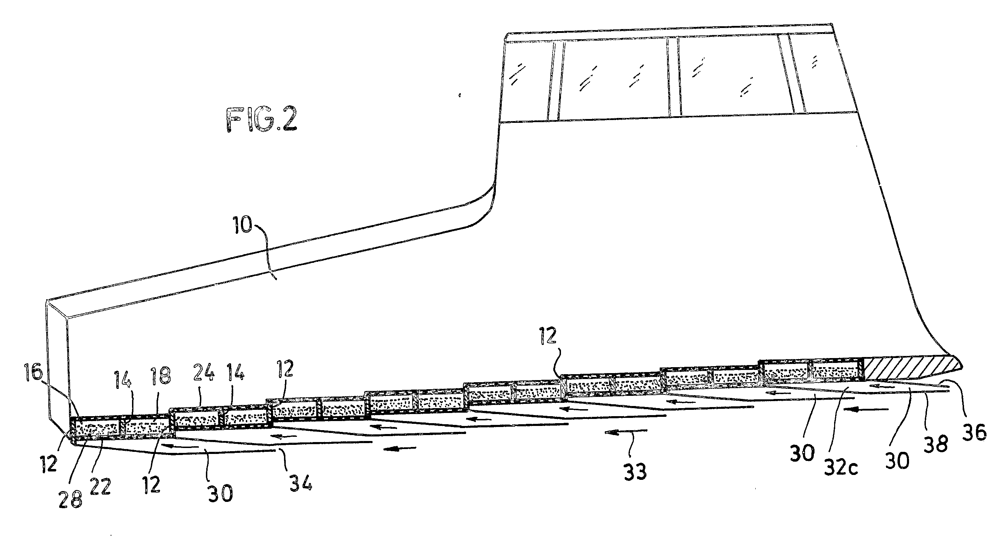

Das in den Fig. 1 und 2 dargestellte Ausführungsbeispiel weist einen Zentralkörper 10 auf, der als Schiffs- oder Schwimmkörper ausgebildet sein und von einem Mutterschiff gezogen oder in einer geeigneten Strömung verankert werden kann. Dieser Zentralkörper 10 trägt an beiden Seiten Ausleger 11, die mit vom Wasser vertikal durchströmten Kanälen versehen sind, in denen sich die Adsorberbetten befinden. Aus Gründen der Übersichtlichkeit ist in Fig. 1 lediglich der grundsätzliche Aufbau einer derartigen Vorrichtung dargestellt. Die Einzelheiten des Aufbaus der Ausleger ergeben sich aus den Fig. 2 bis 4. Sie bestehen aus einer Vielzahl von in horizontaler Ebene verlaufenden, langgestreckten Gehäusen 12, die durch eine in Längsrichtung der einzelnen Gehäuse verlaufende Mittelwand 14 in zwei Teilbereiche oder Kanäle 16 und 18 unterteilt sind. Die Anordnung ist dabei so getroffen, daß die Mittelwand 14 nicht bis zum freien Ende des jeweiligen Auslegers 11 bzw. des Gehäuses 12 durchgezogen ist. Vielmehr verbleibt ein freier Durchgang 20 von dem einen Kanal in den anderen.

Jedes Gehäuse 12 und damit die beiden Teilbereiche oder Kanäle 16 und 18 jedes Gehäuses sind unterseitig durch ein Gitter, Sieb od. dgl. 22 begrenzt, welches einen bestimmten Strömungswiderstand aufweist. Es dient zur Stabilisierung des Strömungsprofiles innerhalb des Adsorberbettes. Weiterhin kann jedes Gehäuse 12 mit seinen beiden Kanälen 16 und 18 auch oberseitig durch ein Sieb, Gitter od. dgl. 24 abgedeckt sein, dessen Funktion im wesentlichen darin besteht, das Austreten von Adsorberteilchen nach oben aus dem Gehäuse 12 zu verhindern.

Frisches, ungesättigtes Adsorptionsmaterial wird kontinuierlich oder diskontinuierlich aus dem Körper 10 in jeweils einen der beiden Kanäle 16 bzw. 18 eines Gehäuses 12 gegeben, während vorzugsweise in den gleichen Raten und/oder Mengen gesättigtes Adsorptionsmaterial aus dem jeweils anderen Teilbereich in den Schiffskörper 10 hinein abgezogen wird. Wenn unterstellt wird, daß das frische, ungesättigte Adsorptionsmaterial in den Kanal 16 gegeben wird, bewegt es sich in Richtung des Pfeiles 26 durch das Gehäuse 12, wobei es im Durchgang 20 vom Kanal 16, in welchem es sich vom Schiffskörper 10 wegbewegt, in den Kanal 18 übertritt, in welchem es wieder zum Schiffskörper 10 sich langsam zurückbewegt. Das aus dem Körper 10 in den Kanal 16 gegebene Adsorptionsmaterial wird zu einem Fluidatbett 28 aufgelockert. Diesen fluidierten Zustand bewahrt das Material während des gesamten Durchganges durch die Kanäle 16 und 18, wobei das Hineingeben des frischen Materials in den Kanal 16 und das entsprechende Hinausnehmen von gesättigtem Material aus dem Kanal 18 sowie die Tendenz der Gesamtheit der Adsorptionsteilchen, sich möglichst gleichmäßig in der Flüssigkeit zu verteilen, zu einer Bewegung des Bettes 28 parallel zum Längsverlauf des Gehäuses 12 und somit quer zur Strömungsrichtung des Wassers innerhalb des Gehäuses 12 bzw. der Kanäle 16 und 18 führt. Diese sehr langsam stattfindende Bewegung des Bettes ist insbesondere deshalb von Bedeutung, weil sie einen kontinuierlichen Betrieb der Anlage ermöglicht.

Die Adsorberteilchen können nach Passieren der beiden Teilbereiche bzw. Kanäle 16 und 18 eluiert werden. Es ist aber auch möglich, die Anordnung so zu treffen, daß die Adsorberteilchen mehrere Ausleger bzw. deren Kanäle oder Teilbereiche nacheinander durchlaufen, bevor die Elution durchgeführt wird.

Das innerhalb der Gehäuse 12 bzw. der Kanäle 16 und 18 befindliche Adsorptionsmaterial wird durch das von unten durch die Gitter od. dgl. 22 einströmende Wasser fluidiert. Dies setzt voraus, daß die im wesentlichen in horizontaler Ebene erfolgende natürliche Meeres- oder Flußströmung bzw. der ihr innewohnende dynamische Druck in einen statischen Druck umgewandelt wird, um das Wasser im wesentlichen vertikal nach oben durch die von den beiden Teilbereichen 16 und 18 gebildeten Kanäle zu drücken. Diese Umwandlung geschieht unter Anwendung von Diffusoren. Bei dem in der Zeichnung dargestellten Ausführungsbeispiel ist jedem Gehäuse mit den beiden Teilbereichen 16 und 18 ein Diffusor vorgeschaltet. Es besteht selbstverständlich auch abweichend von der in der Zeichnung dargestellten Ausführung die Möglichkeit, mehreren Gehäusen einen gemeinsamen Diffusor vorzuschalten oder aber auch jedem Teilbereich seinen eigenen Diffusor zuzuordnen.

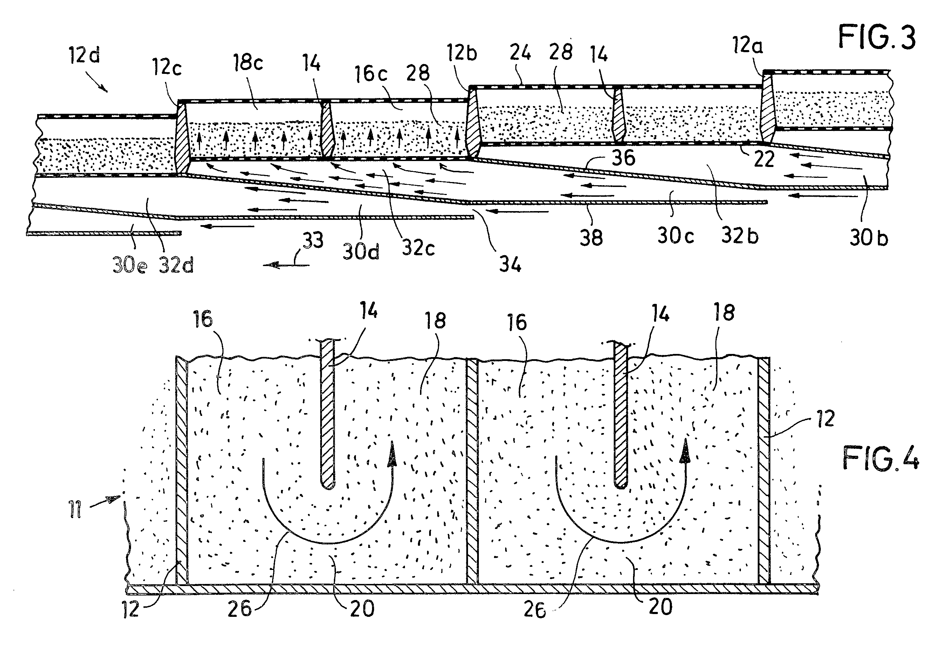

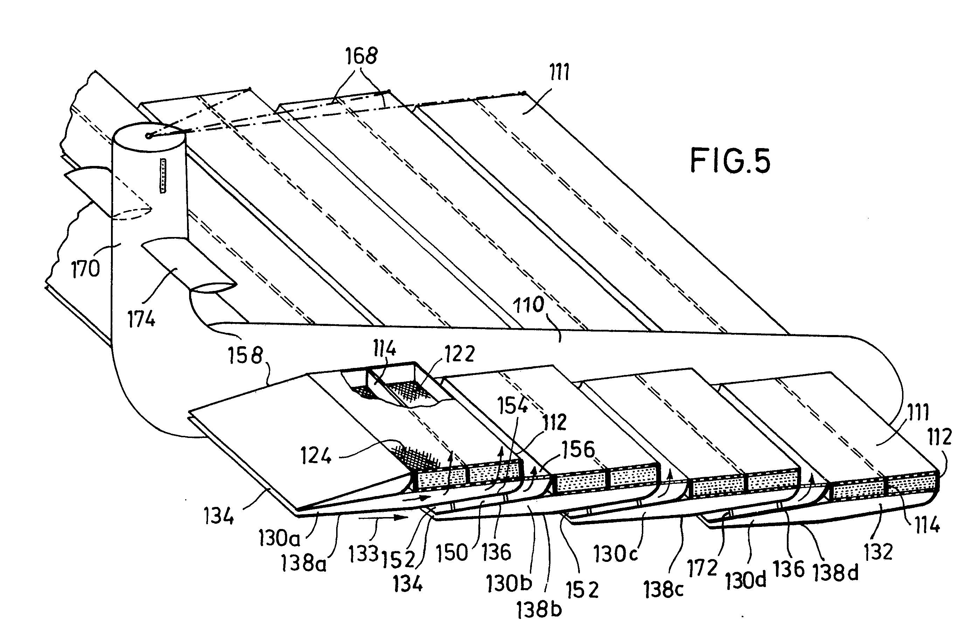

Bei den in den Fig. 2 und 4 dargestellten Ausführungsbeispielen ist die Anordnung so getroffen, daß die einzelnen Gehäuse 12 derart stufenförmig zueinander versetzt angeordnet sind, daß in Strömungsrichtung das jeweils nachfolgende Gehäuse 12 tiefer liegt als das unmittelbar vorangehende Gehäuse. Auf diese Weise wird erreicht, daß unterhalb jedes Gehäuses 12, und zwar in einem Abstand von der unteren Begrenzung desselben bzw. vom unteren Gitter oder Sieb 22 ein Diffusor 30 angeordnet ist, der im wesentlichen in horizontaler Ebene verläuft und in einen Zwischenbereich 32 übergeht, der unterhalb des Gehäuses 12 angeordnet ist, dem der jeweilige Diffusor 30 zugeordnet ist. In Fig. 3 der Zeichnung sind die einzelnen Gehäuse sowie die jeweils zugehörigen Diffusoren und Zwischenbereiche zusätzlich mit übereinstimmenden Buchstaben versehen. Die Zeichnung läßt erkennen, daß der einem bestimmten Gehäuse 12 zugeordnete Diffusor, also beispielsweise der Diffusor 30c des Gehäuses 12c, sich unterhalb des vorgeschalteten und eine Stufe höher befindlichen Gehäuses 12b befindet. Der Übergang vom vorgeschalteten Diffusor zum zugehörigen Gehäuse bzw. den darin befindlichen Teilbereichen — z. B. 16c und 18c — erfolgt über den Zwischenbereich 32, in welchem die Umlenkung des Wassers aus einem im wesentlichen horizontalen in einen vertikal nach oben gerichteten Strömungsverlauf erfolgt oder doch zumindest beginnt. Die Strömungsrichtung der natürlichen Meeres- oder Flußströmung ist in den Fig. 2 und 4 mit 33 bezeichnet. Die im Diffusor 30c, dem Zwischenbereich 32c und den beiden Teilbereichen 16c und 18c eingezeichneten Pfeile deuten den grundsätzlichen Strömungsverlauf an. Die Eintrittsöffnungen 34 der Diffusoren müssen zur Strömung 33 so angeordnet sein, daß die Strömung auch mehr oder weniger ungehindert in die Diffusoren eintreten kann.

Fig. 2 und 4 lassen erkennen, daß die Anbringung der Diffusoren keinen großen Mehraufwand erfordert. Aufgrund der Tatsache, daß die Diffusoren wegen des vorhandenen Raumes eine Länge aufweisen können, die etwa der Breite der Gehäuse 12 entspricht, besteht auch im Normalfall ohne weiteres die Möglichkeit, die Diffusoren bezüglich ihrer Länge an die jeweiligen Gegebenheiten anzupassen. Des weiteren ist es ohne große Schwierigkeiten, insbesondere ohne großen Mehraufwand möglich, wenigstens eine der beiden Begrenzungswände 36 und 38 jedes Diffusors verstellbar anzuordnen. Aus dem Gesamtzusammenhang ergibt sich, daß die Erstreckung der die Diffusoren und auch die Übergangsbereiche begrenzenden bzw. bildenden Bleche od. dgl. normalerweise der Längserstreckung der Gehäuse 12 entspricht, da das Fluidatbett auch über die gesamte Längserstreckung des Gehäuses 12 bzw. der beiden Teilbereiche 16 und 18 aufrechterhalten bleiben soll.

Das Ausführungsbeispiel gemäß Fig. 5 entspricht in seinem prinzipiellen Aufbau den Fig. 1–4, so daß gleiche Teile auch mit gleichen, jeweils um 100 höheren Bezugszeichen versehen sind. Der langgestreckte Schwimmkörper 110 trägt beidseitig im wesentlichen horizontal verlaufende Ausleger 111, von denen jeder im wesentlichen aus einem Einlaufdiffusor 130a–d, der von einer oberen Wand 136 und einer unteren Wand 138a–d begrenzt ist, einer Zwischenkammer 132 und den vom Wasser vertikal nach oben durchströmten Kanälen, die durch das Gehäuse 112 und die Mittelwand 114 begrenzt sind, besteht. Diese Kanäle sind mit oberen und unteren Gittern 122 bzw. 124 versehen. Insoweit besteht Übereinstimmung mit den Fig. 1–4. Zusätzlich sind zwischen den jeweils einen Ausleger 111 bildenden Baugruppen Ableitkanäle 150 vorgesehen, deren Einlauföffnung 152 sich jeweils oberhalb der Einlauföffnung 134 des darunter liegenden Diffusors 130b–d befindet. Praktisch liegen beide Einlauföffnungen 134 und 152 in einer vertikalen Ebene. Der Ableitkanal 150 wird unterseitig durch die obere Wandung 136 des darunter liegenden Diffusors 130b–d begrenzt. Oberseitig bildet die untere Begrenzungswand 154 der Zwischenkammer 132 die Begrenzung des Ableitkanals 150, der somit über die Länge des Diffusors 130b–d und der darüber befindlichen Zwischenkammer 132 im wesentlichen horizontal verläuft und am Ende der Zwischenkammer 132 bzw. des darüber befindlichen Gehäuses 112 sich nach oben öffnet.

Aufgrund der in Strömungsrichtung 133 gestaffelten Anordnung der Diffusoren 130a–d der einzelnen hintereinander befindlichen Baugruppen 111 ist es unvermeidbar, daß — abgesehen von in Strömungsrichtung erstem Diffusor 130a — das in Richtung auf den jeweils nächsten Diffusor strömende Wasser oberseitig vor Erreichen desselben an der unteren Begrenzungswand 138a–d der vorgeschalteten Baugruppe entlangströmt. Die Grenzschicht dieses Wassers, die mit der Wandung 130a–c in Berührung kommt, erfährt eine Verlangsamung ihrer Strömungsgeschwindigkeit, wobei sich diese Verlangsamung im Verlauf der Bewegung nach unten fortpflanzt, so daß die Dicke der verlangsamten Wasserschicht in Strömungsrichtung 133 zunimmt. Jedenfalls tritt das Wasser in den darauffolgenden Diffusor mit entsprechend verringerter Strömungsgeschwindigkeit ein. Bei einer Strömung mit sehr hoher Geschwindigkeit mag diese Verlangsamung in Kauf genommen werden, da die Restgeschwindigkeit immer noch ausreicht, um das im Gehäuse 112 befindliche Bett zu fluidieren und in der Schwebe zu halten. Bei langsameren Strömungen, beispielsweise ca. 1 m/s kann jedoch die Verlangsamung der Strömungsgeschwindigkeit durch die Reibung zwischen der jeweils unteren Begrenzungswand des vorangehenden Diffusors und der Grenzschicht der Flüssigkeit zu einer derartig geringen Rest-Strömungsgeschwindigkeit führen, daß der durch sie im Diffusor erzeugte statische Druck nicht mehr genügt, um eine ausreichende Durchströmung des Fluidatbettes zu gewährleisten. Hierbei ist zusätzlich zu berücksichtigen, daß die Auswirkungen, also die Verlangsamung der Strömungsgeschwindigkeit an jeder unteren Begrenzung eines Einlaufdiffusors, sich bei einer Vielzahl von in Strömungsrichtung hintereinander geschalteten Auslegern bzw. Baugruppen 111 summieren, so daß es im Bereich der Diffusoren praktisch zu einem Stillstand der Strömung kommen kann.

Bei der Ausführungsform gemäß Fig. 5 wird diesem Sachverhalt dadurch Rechnung getragen, daß die durch die Reibung zwischen beispielsweise der unteren Begrenzungswand 138a des Diffusors 130a und der Grenzschicht des in Richtung des Pfeiles 133 strömenden Wassers beeinflußte Wasserschicht vom Ableitkanal 150 aufgefangen wird und durch dessen obere Öffnung 156 wieder ins Freie abströmt. Erst die darunter befindliche Flüssigkeitsschicht gelangt in den nachgeordneten Diffusor 130b. Sie weist die mehr oder weniger unbeeinflußte normale, jedenfalls eine ausreichende Strömungsgeschwindigkeit auf, so daß — abgesehen natürlich von den Reibungsverlusten innerhalb des Einlaufdiffusors 130 — diese Strömungsgeschwindigkeit zum Aufbau des statischen Druckes für das Fluidieren der Adsorberpartikel im Gehäuse 112 ausreicht. Entsprechendes gilt auch für alle nachgeschalteten Einlaufdiffusoren 130c und 130d und die zugeordneten Ableitkanäle 150.

Selbstverständlich ist es in Abhängigkeit von den jeweiligen Bedingungen möglich, die Ableitkanäle nur an einigen Baugruppen anzubringen.

In Strömungsrichtung 133 vor dem ersten Gehäuse 112 ist oberhalb des Einlaufdiffusors 130a ein Leitblech 158 angeordnet, das verhindern soll, daß das strömende Wasser frontal auf das Gehäuse 112 trifft. Letzteres könnte zu Turbulenzen führen, die ein ruhiges Ausströmen des das Bett aus Adsorberpartikeln nach oben verlassende Wasser beeinträchtigen würde.

Es ist anzustreben, daß die Geschwindigkeit, mit welcher das Wasser innerhalb der einzelnen Gehäuse 112 nach oben strömt, über den horizontalen Querschnitt des Gehäuses so gleichmäßig wie möglich ist. Es ist jedoch — wenn nicht besondere Vorkehrungen getroffen werden — unvermeidbar, daß innerhalb jedes Diffusors 130a — d aufgrund der Reibung zwischen der im Diffusor in Richtung des Pfeiles 133 strömenden Flüssigkeit einerseits und den Begrenzungswänden 136, 138 andererseits Strömungsprofile 160a, 160b, 160c etwa gemäß der Darstellung der Fig. 6b entstehen. Dabei eilt die Strömung im mittleren Bereich zwischen den beiden Begrenzungswänden 136 und 138 den Strömungen im oberen und unteren Randbereich merklich voraus. Die über den Austrittsquerschnitt 162 ungleichmäßige Geschwindigkeit setzt sich in die Zwischenkammer 132 und in den darüber innerhalb des Gehäuses 112 befindlichen Kanal fort, so daß es zwangsläufig auch zu Ungleichmäßigkeiten innerhalb des von den Adsorberpartikeln gebildeten Bettes kommt.

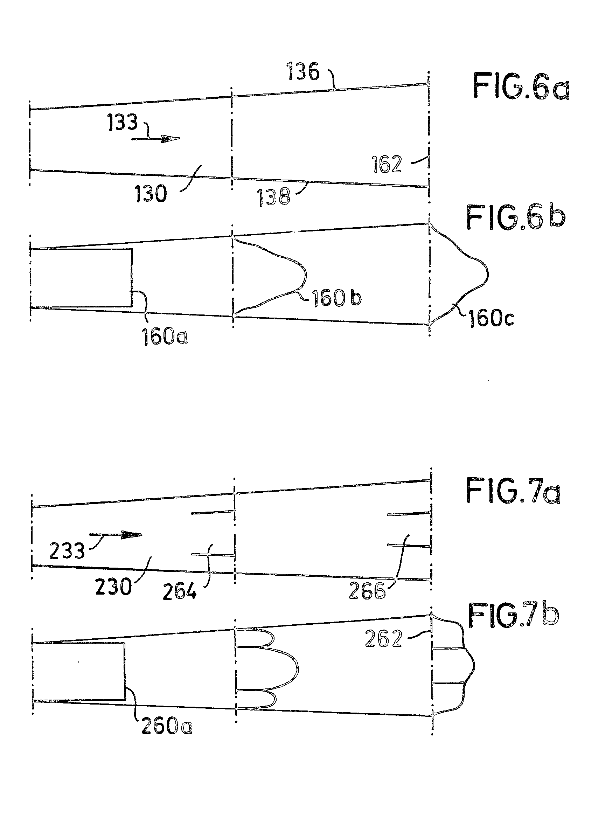

Bei der Ausführungsform gemäß den Fig. 7a und 7b, in denen mit den Fig. 5 und 6a sowie 6b übereinstimmende Teile mit gleichen, jedoch um jeweils 100 höheren Bezugszeichen versehen sind, befinden sich innerhalb des Diffusors 230 in dessen mittleren Höhenbereich kleinere Ausgleichsdiffusoren 264 und 266, die hintereinander angeordnet sind und sich über die gesamte Länge des Diffusors 230 erstrecken, wobei die Höhenabmessung des in Strömungsrichtung 266 zweiten Diffusors kleiner ist als die des ersten Diffusors 264. Die oben und unten im Diffusor 230 befindlichen Randströmungen bleiben durch die Ausgleichsdiffusoren 264 und 266 im wesentlichen unbeeinflußt. Die Geschwindigkeitsprofile der Fig. 7b im Vergleich zu denen der Fig. 6b zeigen, daß durch die Innendiffusoren 264, 266 eine merkliche Vergleichmäßigung der Geschwindigkeit in der Austrittsebene 262 bewirkt wird, und zwar auch mit einer Verbesserung des Druckumsetzungswirkungsgrades um einige Prozent, ggf. bis zu 10%. Selbstverständlich können in Abhängigkeit von den jeweiligen Gegebenheiten auch mehr als zwei Ausgleichsdiffusoren hintereinandergeschaltet sein. Es ist ggf. auch ausreichend, nur einen Ausgleichsdiffusor vorzusehen.

Eine andere Möglichkeit zur Vergleichmäßigung des Strömungsprofils über den Austrittsquerschnitt des Einlaufdiffusors könnte in der Verwendung von Vortex-Generatoren bestehen, die in den Einlaufdiffusor 130 eingebaut sind und durch Wirbelbildung eine Vergleichmäßigung der Strömungsgeschwindigkeit herbeiführen.

Das Ausführungsbeispiel gemäß Fig. 5 zeigt, daß die einzelnen Baugruppen 111 über Seile 168 am oberen Ende eines turmartigen Fortsatzes 170 des Tragkörpers 110 verspannt sind. Jede einzelne Baugruppe 111 ist darüber hinaus über Stützelemente 172, auf denen die untere Begrenzungswand 154 der Zwischenkammer 132 aufsitzt, auf der oberen Begrenzungswand 136 des Einlaufdiffusors 130b — d der in Strömungsrichtung 133 jeweils folgenden Baugruppe abgestützt. Diese Stützelemente 172 sind entweder elastisch, z. B. als Schraubenfedern, ausgebildet oder unter Zwischenschaltung elastischer Verbindungselemente mit der Wandung 154 und/oder 136 verbunden. Das heißt, daß die Stützelemente 172 den Ableitkanal 150 durchragen. Durch die vorbeschriebene Ausgestaltung wird erreicht, daß die Strukturfestigkeit der Gesamtheit der Ausleger bzw. Baugruppen verhältnismäßig gering ist. Die einzelnen Baugruppen 111 sind gegeneinander in gewissem Umfang bewegbar, so daß sie beispielsweise bei starkem Wellengang sich den Bewegungen des Wassers innerhalb gewisser Grenzen unabhängig voneinander anpassen können. Dies ist deshalb wichtig, weil die einzelnen Ausleger 111 eine Länge beispielsweise bis zu 150 m aufweisen können. Die vorstehend beschriebene Bauweise ermöglicht es, die Baugruppen 111 einzeln herzustellen und dann zwecks Montage der Gesamtheit an den Körper 10 heranzuschwimmen und dort zu montieren.

Die Teile 174 dienen der Lage- und Höhenstabilisierung der Gesamtheit. Das obere Ende des turmartigen Fortsatzes 170 ist mit einer Öffnung versehen, durch die der Zentralkörper 110 von außen zugänglich ist und z. B. die beladenen Adsorberpartikel herausgeführt und frische Adsorberpartikel zugeführt werden können. Eine andere Möglichkeit besteht darin, die zur Elution der beladenen Adsorberpartikel notwendige Flüssigkeit durch die Öffnung in den Körper 110 hineinzubringen und nach Durchführung der Elution die beladene Flüssigkeit zur Weiterverarbeitung aus der Anlage herauszuführen.

**Patentansprüche**

1. Verfahren zur Gewinnung von gelösten, suspendierten oder chemisch gebundenen Stoffen, z. B. Uran- oder anderen Metallverbindungen, aus einem eine im wesentlichen horizontale Strömung aufweisenden Gewässer, aus welchem Wasser in einem im wesentlichen in die Vertikale umgelenkten Strom durch ein fluidiertes Bett aus die Stoffe bindenden Adsorberpartikeln geleitet wird, dadurch gekennzeichnet, daß das durch das Bett zu leitende Wasser zumindest vor der Umlenkung in die Vertikale zwecks Erhöhung des statischen Drucks durch einen Diffusor geführt wird.

2. Verfahren nach Anspruch 1, dadurch gekennzeichnet, daß wenigstens die energiearme Teilschicht der Wasser-Grenzschicht, die vor Erreichen des Diffusors unter dem Einfluß von Flächenreibung entsteht, mittels eines Ableitkanals vom Eintritt in die Öffnung des Diffusors abgehalten wird.

3. Verfahren nach Anspruch 1 oder 2, dadurch gekennzeichnet, daß Strömungsgeschwindigkeit und statischer Druck durch geeignete Einbauten im Diffusor über dessen Querschnitt vergleichmäßigt werden.

4. Vorrichtung zur Durchführung des Verfahrens nach einem der Ansprüche 1 — 3 mit einem Gehäuse, das wenigstens einen im wesentlichen vertikalen Kanal für den Durchgang der Flüssigkeit durch das fluidierte Bett aufweist, dadurch gekennzeichnet, daß dem Einlauf des vertikalen Kanals ein im wesentlichen horizontal verlaufender Diffusor (30) vorgeschaltet ist, dessen Eintrittsöffnung (34) der im wesentlichen horizontalen Strömung (33) entgegengerichtet ist.

5. Vorrichtung nach Anspruch 4, dadurch gekennzeichnet, daß die untere Begrenzungsfläche (38) des Diffusors im wesentlichen horizontal bzw. parallel zur unteren Begrenzung des Gehäuses (12) verläuft.

6. Vorrichtung nach Anspruch 4, dadurch gekennzeichnet, daß oben und unten befindliche Begrenzungswandungen des Diffusors (30) zueinander symmetrisch angeordnet sind.

7. Vorrichtung nach einem der vorhergehenden Ansprüche 4 bis 6, dadurch gekennzeichnet, daß zwischen Diffusor (30) und Gehäuseeinlauf ein Zwischenbereich (32) angeordnet ist, der vom Gehäuse (12) bzw. von einem in oder nahe dem Einlauf befindlichen siebartigen Strömungswiderstand (22) und unten von einer Wand (36) begrenzt ist, deren Abstand vom Gehäuse (12) in Strömungsrichtung (33) des Wassers abnimmt.

8. Vorrichtung nach einem der vorhergehenden Ansprüche 4 bis 7, bei welcher wenigstens zwei Gehäuse in Strömungsrichtung des Wassers hintereinander und derart zueinander höhenversetzt angeordnet sind, daß das in Strömungsrichtung jeweils folgende Gehäuse tiefer oder höher angeordnet ist als das vorangehende Gehäuse, dadurch gekennzeichnet, daß der Diffusor (30c) eines Gehäuses (12c) unterhalb oder oberhalb des vorangehenden Gehäuses (12b) angeordnet ist.

9. Vorrichtung nach Anspruch 8, dadurch gekennzeichnet, daß die Einlauföffnung (134) wenigstens eines Diffusors (130) sich in einem Abstand von der benachbarten Begrenzungsfläche der jeweils vorangehenden Baueinheit (111) befindet und oberhalb oder unterhalb des Diffusors (130) und parallel zu diesem ein Ableitkanal (150) vorgesehen ist, der die unmittelbar unterhalb oder oberhalb des in Strömungsrichtung (133) davor liegenden Gehäuses (112) bzw. Diffusors (130) befindliche Wasser-Grenzschicht ableitet.

10. Vorrichtung nach Anspruch 9, dadurch gekennzeichnet, daß der Abstand etwa der Höhe der durch Flächenreibung entstehenden Wasser-Grenzschicht entspricht.

11. Vorrichtung nach Anspruch 9 oder 10, dadurch gekennzeichnet, daß der Ableitkanal (150) zwischen Diffusor (130) und Gehäuse (112) der vorgeschalteten Baueinheit (111) verläuft und sein Austrittsende (156) sich zwischen zwei in Strömungsrichtung aufeinanderfolgenden Gehäusen (112) befindet.

12. Vorrichtung nach einem der vorhergehenden Ansprüche 9 bis 11, dadurch gekennzeichnet, daß, abgesehen von der ersten Baugruppe (111), jedem Einlaufdiffusor (130) ein Ableitkanal (150) zugeordnet ist.

13. Vorrichtung nach Anspruch 4 zur Durchführung des Verfahrens nach Anspruch 3, dadurch gekennzeichnet, daß innerhalb des Einlaufdiffusors (230) zwischen unterer und oberer Begrenzung desselben im mittleren Höhenbereich wenigstens ein Ausgleichsdiffusor (264, 266) angeordnet ist, durch den Geschwindigkeit und statischer Druck über den Diffusorquerschnitt vergleichmäßigt werden.

14. Vorrichtung nach Anspruch 13, dadurch gekennzeichnet, daß mehrere Ausgleichsdiffusoren (264, 266) in Strömungsrichtung hintereinander angeordnet sind und der in Strömungsrichtung (233) jeweils nachfolgende Ausgleichsdiffusor (266) eine in Abhängigkeit von der nach dem vorhergehenden Diffusor (264) verbleibenden Ungleichmäßigkeiten bezüglich Geschwindigkeit und statischem Druck kleinere Querschnittsfläche aufweist als der vorhergehende Ausgleichsdiffusor (264).

15. Vorrichtung nach einem der vorhergehenden Ansprüche, dadurch gekennzeichnet, daß die einzelnen im wesentlichen aus Gehäuse (112), Einlaufdiffusor (130) und Zwischenkammer (132) sowie ggf. Ableitkanal (150) bestehenden Baugruppen (111) unstarr aneinander angebracht sind.

16. Vorrichtung nach den Ansprüchen 7 und 15, dadurch gekennzeichnet, daß die Begrenzungswand (154) der Zwischenkammer (132) jeder Baugruppe (111) die obere oder untere Begrenzung des Ableitkanals (150) der jeweils in Strömungsrichtung (133) folgenden Baugruppe (111) bildet.

17. Vorrichtung nach Anspruch 16, dadurch gekennzeichnet, daß eine Baugruppe (111) unter Zwischenschaltung elastischer Mittel (172) auf der in Strömungsrichtung jeweils folgenden oder vorhergehenden, etwas tiefer angeordneten Baugruppe (111) aufliegt.

18. Vorrichtung nach Anspruch 17, dadurch gekennzeichnet, daß die elastisch nachgiebigen Abstützmittel (172) zwischen Zwischenkammer (132) und Einlaufdiffusor (130) zweier aufeinanderfolgender Baugruppen (111) angeordnet sind.

19. Vorrichtung nach einem der vorhergehenden Ansprüche, dadurch gekennzeichnet, daß die Baugruppen (111) über flexible Halterungen (168) an einem Tragkörper (110) aufgehängt sind.

## Claims

1. A process for obtaining dissolved, suspended or chemically combined substances, such as compounds of uranium or other metals, from a body of water which includes a substantially horizontal stream and from which water is passed in a stream deflected substantially vertically through a fluidized bed of adsorber particles binding the substances, characterized in that water to be passed through the bed is guided at least before the vertical deflection through a diffuser in order to increase the static pressure.

2. A process according to Claim 1, characterized in that at least the low-energy partial layer of the boundary layer of the water which, before it reaches the diffuser, is under the influence of surface friction, is by a diversion channel prevented from entering the opening in the diffuser.

3. A process according to Claim 1 or 2, characterized in that the velocity of flow and static pressure are rendered uniform over the cross-section of the diffuser by suitable means provided in the diffuser.

4. An apparatus for carrying out the process according to one of the Claims 1–3 having a housing which has at least one substantially vertical channel for the flow of the liquid through the fluidized bed, characterized in that a substantially horizontally extending diffuser (30) is situated upstream of the inlet of the vertical channel, the inlet opening (34) of the diffuser facing substantially against the substantially horizontal stream (33).

5. An apparatus according to Claim 4, characterized in that the lower wall (38) delimiting the diffuser is substantially horizontal or, parallel to the lower delimiting wall of the housing (12).

6. An apparatus according to Claim 4, characterized in that the upper and lower walls delimiting the diffuser (30) are symmetrical with respect to each other.

7. An apparatus according to one of the preceding Claims 4 to 6, characterized in that an intermediate zone (32) is provided between the diffuser (30) and the inlet into the housing, which zone is delimited by the housing (12) or by a sieve-like flow restrictor (22) situated in or near the inlet, and at its bottom by a wall the distance of which from the housing (12) decreases in the direction of flow (33) of the water.

8. An apparatus according to one of the preceding Claims 4 to 7, in which at least two housings are arranged in the direction of flow of the water one after another and displaced in height relative to each other such that each housing following in the direction of flow is arranged lower or higher than the housing upstream thereof, characterized in that the diffuser (30c) of a housing (12c) is positioned above or below the preceding housing (12b).

9. An apparatus according to Claim 8, characterized in that the inlet opening (134) of at least one diffuser (130) is situated spaced from the adjacent delimiting wall of the preceding structural unit (111) and above or below the diffuser (130) and parallel thereto is provided a diversion channel (150) which diverts the boundary layer of water present immediately below or above the housing (112) of diffuser (130) situated upstream thereof in the direction of flow (133).

10. An apparatus according to Claim 9, characterized in that the distance corresponds approximately to the height of the boundary layer of water formed by surface friction.

11. An apparatus according to Claim 9 or 10, characterized in that the diversion channel (150) extends between the diffuser (130) and the housing (112) of the upstreamsituated structural unit (111) and its outlet end (156) is located between two housings (112) following each other in the direction of flow.

12. An apparatus according to one of the preceding Claims 9 to 11, characterized in that, apart from the first structual group (111), a diversion channel (150) is associated with each inlet diffuser (130).

13. An apparatus according to Claim 4 for carrying out the process according to Claim 3, characterized in that at least one compensating diffuser (264, 266) is situated in the inlet diffuser (230) between the lower and upper delimiting walls thereof in the medium height zone, by which are rendered uniform the velocity and static pressure over the cross-section of the diffuser.

14. An apparatus according to Claim 13, characterized in that several compensating diffusers (264, 266) are arranged one after another in the direction of flow and each compensating diffuser (266) following in the direction of flow (233) has a cross-sectional area which is smaller than those of the preceding compensating diffuser (264) depending on the non-uniformities in velocity and static pressure, which still remain downstream of the diffuser (264).

15. An apparatus according to one of the preceding claims, characterized in that the respective structural groups (111), which consist substantially of a housing (112), an inlet diffuser (130) and an intermediate chamber (132), and possibly a diversion channel (150), are non-rigidly fitted together.

16. An apparatus according to claims 7 and 15, characterized in that the delimiting wall (154) of the intermediate chamber (132) of each structural group (111) forms the upper and lower boundary of the diversion channel (150) of that structural group (111) which follows in the direction of flow (155).

17. An apparatus according to claim 16, characterized in that a structual group (111) lies on the structural group (111) which lies in the direction of flow downstream or upstream therefrom, with resilient means disposed therebetween.

18. An apparatus according to claim 17, characterized in that the resilient support means (172) are arranged between the intermediate chamber (132) and the inlet diffuser (130) of two successive structural groups (111).

19. An apparatus according to one of the preceding claims, characterized in that the structural groups (111) are suspended on a carrier body (110) via flexible mountings (168).

**Revendications**

1. Procédé en vue d'extraire des substances dissoutes, en suspension ou fixées chimiquement, par exemple, des composés d'uranium ou d'autres métaux, hors d'une eau s'écoulant essentiellement dans le sens horizontal et de laquelle on fait passer un courant d'eau dévié essentiellement dans le sens vertical à travers un lit fluidisé de particules d'un agent d'adsorption fixant la substance concernée, caractérisé en ce que, afin d'augmenter la pression statique, au moins avant sa déviation dans le sens vertical, on fait passer l'eau devant traverser le fit, à travers un diffuseur.

2. Procédé suivant la revendication 1, caractérisé en ce qu'au moins la couche partielle (pauvre en énergie) de la couche limite d'eau se formant avant d'atteindre le diffuseur sous l'influence de la friction superficielle, est empêchée de pénétrer dans l'ouverture du diffuseur au moyen d'un canal de dérivation.

3. Procédé suivant l'une quelconque des revendications 1 et 2, caractérisé en ce que la vitesse d'écoulement et la pression statique sont égalisées en incorporant des pièces rapportées appropriées dans le diffuseur et sur la section transversale de ce dernier.

4. Dispositif pour la réalisation du procédé suivant l'une quelconque des revendications 1 à 3, ce dispositif comportant un logement pourvu d'au moins un canal essentiellement vertical pour le passage du liquide à travers le fit fluidisé, caractérisé en ce que, devant l'entrée de ce canal vertical, est installé un diffuseur (30) s'étendant essentiellement dans le sens horizontal et dont l'ouverture d'entrée (34) est dirigée à l'opposé du courant essentiellement horizontal (33).

5. Dispositif suivant la revendication 4, caractérisé en ce que la surface de délimitation inférieure (38) du diffuseur s'étend essentiellement horizontalement ou parallèlement à la délimitation inférieure du logement (12).

6. Dispositif suivant la revendication 4, caractérisé en ce que les parois de délimitation se trouvant dans la partie supérieure et la partie inférieure du diffuseur (30) sont disposées symétriquement l'une par rapport à l'autre.

7. Dispositif suivant l'une quelconque des revendications 4 à 6, caractérisé en ce que, entre le diffuseur (30) et l'entrée du logement, est située une zone intermédiaire (32) qui est délimitée par le logement (12) ou par un élément en forme de tamis (22) offrant une résistance à l'écoulement et situé dans ou à proximité de l'entrée précitée, ainsi que, dans le bas, par une paroi (36) dont l'écartement vis-à-vis du logement (12) diminue dans le sens d'écoulement (33) de l'eau.

8. Dispositif suivant l'une quelconque des revendications 4 à 7, dispositif dans lequel, vu dans le sens d'écoulement de l'eau, au moins deux logements sont disposés l'un derrière l'autre et décalés en hauteur l'un par rapport à l'autre de telle sorte que, également vu dans le sens d'écoulement, chaque logement soit situé plus haut ou plus bas que celui qui le précède, caractérisé en ce que le diffuseur (30c) d'un logement (12c) est situé en dessous ou au-dessus du logement précédent (12b).

9. Dispositif suivant la revendication 8, caractérisé en ce que l'ouverture d'admission (134) d'au moins un diffuseur (130) se trouve à une certaine distance de la surface de délimitation voisine de chaque unité de montage précédente (111) tandis que, au-dessus ou en dessous du diffuseur (130) et parallèlement à ce dernier, est prévu un canal de dérivation (150) qui dérive la couche limite d'eau se trouvant immédiatement en dessous ou au-dessus du diffuseur (130) ou du logement (112) situé devant dans le sens d'écoulement (133).

10. Dispositif suivant la revendication 9, caractérisé en ce que la distance précitée correspond à peu près à la hauteur de la couche limite d'eau se formant par friction superficielle.

11. Dispositif suivant l'une quelconque des revendications 9 et 10, caractérisé en ce que le canal de dérivation (150) s'étend entre le diffuseur (130) et le logement (112) de l'unité de montage précédente (111), tandis que son extrémité de sortie (156) se situe entre deux logements (112) se succédant dans le sens d'écoulement.

12. Dispositif suivant l'une quelconque des revendications 9 à 11, caractérisé en ce que, hormis le premier groupe de montage (111), un canal de dérivation (150) est adapté à chaque diffuseur d'admission (130).

13. Dispositif suivant la revendication 4 pour la mise en oeuvre du procédé suivant la revendication 3, caractérisé en ce que, à l'intérieur du diffuseur d'admission (230), entre la délimitation inférieure et la délimitation supérieure de ce dernier, on prévoit, à mi-hauteur, au moins un diffuseur de compensation (264, 266) permettant d'égaliser la vitesse et la pression statique sur la section transversale de ce diffuseur d'admission.

14. Dispositif suivant la revendication 13, caractérisé en ce que plusieurs diffuseurs de compensation (264, 266) sont disposés l'un derrière l'autre dans le sens d'écoulement tandis que, vu dans le sens d'écoulement et en fonction des irrégularités de vitesse et de pression statique subsistant par suite du diffuseur précédent (264), chaque diffuseur de compensation (266) a une section transversale plus petite que celle du diffuseur de compensation précédent (264).

15. Dispositif suivant l'une quelconque des revendications 4 à 14, caractérisé en ce que les différents groupes de montage (111) comportant essentiellement un logement (112), un diffuseur d'admission (130) et une chambre intermédiaire (132), ainsi qu'éventuellement un canal de dérivation (150), sont adaptés l'un à l'autre de manière non rigide.

16. Dispositif suivant l'une quelconque des revendications 7 et 15, caractérisé en ce que la paroi de délimitation (154) de la chambre intermédiaire (132) de chaque groupe de montage (111) forme la délimitation supérieure ou la délimitation inférieure du canal de dérivation (150) de chaque groupe de montage suivant (111), vu dans le sens d'écoulement (133).

17. Dispositif suivant la revendication 16, caractérisé en ce qu'un groupe de montage (111) vient prendre appui, en intercalant des éléments élastiques (172), sur chaque groupe de montage suivante ou précédent (vu dans le sens d'écoulement) qui est disposé un peu plus bas.

18. Dispositif suivant la revendication 17, caractérisé en ce que les éléments supports élastiques et souples (172) sont disposés entre la chambre intermédiaire (132) et le diffuseur d'admission (130) de deux groupes de montage successifs (111).

19. Dispositif suivant l'une quelconque des revendications 4 à 18, caractérisé en ce que les groupes de montage (111) sont suspendus à un corps support (110) par l'intermédiaire d'éléments de retenue flexibles (168).

FIG.1

FIG.2

FIG.3

FIG.4

FIG.5

FIG.6a

136

133

130 138 162

FIG.6b

160b

160a 160c

FIG.7a

233

230 264 266

FIG.7b

262

260a